# EUROPÄISCHE PATENTSCHRIFT

(11) **EP 1 689 621 B1**
(45) Veröffentlichungstag und Bekanntmachung des Hinweises auf die Patenterteilung: **19.11.2008**
(21) Anmeldenummer: 04762452.3
(22) Anmeldetag: 22.07.2004
(51) Int. Cl.: B60R 21/34, B60R 21/01

(54) **VORRICHTUNG ZUR ANSTEUERUNG VON SCHUTZMITTELN FÜR EINEN FUSSGÄNGER**
DEVICE FOR CONTROLLING PEDESTRIAN PROTECTION MEANS
DISPOSITIF DE COMMANDE DE MOYENS DE PROTECTION DESTINES A UN PIETON

(30) Priorität: 08.10.2003 DE 10346622
(43) Veröffentlichungstag der Anmeldung: 16.08.2006
(73) Patentinhaber: ROBERT BOSCH GMBH, 70442 Stuttgart (DE)
(72) Erfinder: GROEGER, Ulrike, 70499 Stuttgart (DE); MACK, Frank, 70376 Stuttgart (DE)
(86) Internationale Anmeldenummer: PCT/DE2004/001602
(87) Internationale Veröffentlichungsnummer: WO 2005/044646

(56) Entgegenhaltungen:
- EP-A- 1 426 252
- WO-A-01/15109
- DE-A- 10 107 272
- DE-A- 10 141 730
- DE-A- 19 647 660
- DE-A- 19 754 220
- DE-C- 10 132 681

## Beschreibung

### Stand der Technik

Die Erfindung geht aus von einer Vorrichtung zur Ansteuerung von Schutzmitteln für einen Fußgänger nach der Gattung des unabhängigen Patentanspruchs.

Aus EP 914 992 A1 ist es bekannt, bei einem Fußgängerschutzsystem, hier einer einstellbaren Fronthaube, die Eigengeschwindigkeit des Fahrzeugs beim Betätigen der Fronthaube zu berücksichtigen.

Aus DE 101 07 272 A1 ist ein Verfahren und eine Vorrichtung zur Steuerung von Fahrzeuginsassenrückhaltesystemen bekannt. Dabei wird anhand einer Umfeldsensorik von Beschleunigungssensoren und weiteren Parametern eine Unfallschwere bestimmt. Aus DE 10141 730 ist ein Verfahren zum Schutz von Fußgängern bekannt, wobei mittels Sensoren Parameter über die Bewegung des Fahrzeugs oder die Relativbewegung zum Objekt und Parameter von Objekten im Nahbereich des Fahrzeugs erfasst werden. Aus diesen Parametern wird die Art des Zusammenstoßes ermittelt. Die zu erwartende Art des nachfolgenden Auftreffens des Objekts auf der Fahrbahn wird abgeleitet. Am Fahrzeug vorgesehene Schutzmittel werden entsprechend in Abhängigkeit von der Art des Auftreffens auf der Fahrbahn angesteuert. Aus DE 10132 681 C1 ist ein Verfahren zur Klassifizierung von einem Hindernis anhand von Precrash-Sensorsignalen bekannt. Dabei wird, wenn ein Aufprall mit dem Fußgänger nicht mehr vermieden wird, Außenairbags gezündet, um den Fußgänger zu schützen. Aus der Eigengeschwindigkeit und der Relativgeschwindigkeit kann dabei eine Geschwindigkeit des Hindernisses bestimmt werden.

### Vorteile der Erfindung

Die erfindungsgemäße Vorrichtung zur Ansteuerung von Schutzmitteln für einen Fußgänger mit den Merkmalen des unabhängigen Patentanspruchs hat demgegenüber den Vorteil, dass nunmehr auch die Relativgeschwindigkeit zwischen dem Fahrzeug und dem Fußgänger dazu benutzt wird, um die Ansteuerung von den Schutzmitteln zu bestimmen. Damit ist es insbesondere möglich, die Aufprallenergie abzuschätzen, um in Abhängigkeit von der Aufprallschwere die geeigneten Schutzmittel anzusteuern. Zu den Schutzmitteln gehören eine aufstellbare Fronthaube, Außenairbags, beispielsweise an der A-Säule und auch Fahreingriffe oder andere Veränderungen des Fahrzeugs. Durch das Wissen um die Relativgeschwindigkeit können Sensorsignale genauer gedeutet werden. Durch die Relativgeschwindigkeit wird die zu vernichtende Energie bestimmt, die die Unfallschwere letztlich ausmacht. Je nach Sensor kann ein leichtes, schnelles Objekt genauso aussehen wie ein schweres, langsames, da die gleiche Energie umgesetzt wird. Dies führt insbesondere dazu, dass ungewöhnlich schnelle Fußgänger, wie zum Beispiel

Inlineskater, Rollerfahrer oder eventuell auch Fahrradfahrer besser geschützt werden. Diese Gruppen werden hier auch als Fußgänger gezählt. Zu den Sensorsignalen, die damit besser gedeutet werden, gehören zum Beispiel eine Objektklasse, der Auftreffzeitpunkt, die Breite, Größe und eine Schätzung des Gewichts des Fußgängers. Diese Sensorsignale oder abgeleiteten Merkmale von Sensorsignalen werden insbesondere von der Umfeldsensorik, wie einer Videosensorik, Radarsensorik oder Ultraschallsensorik erhalten.

Durch die Kenntnis der Relativgeschwindigkeit und der Eigengeschwindigkeit des Fahrzeugs kann die Eigengeschwindigkeit des Stoßpartners erfasst werden. Dadurch können normale Fußgänger von schnellen Fußgängern, wie Fahrradfahrern und Inlineskatern, unterschieden werden. Durch ihre höhere Eigengeschwindigkeit, ihren höheren Schwerpunkt und ihre geringere Reibung zum Boden ist die Flugbahn dieser Personen bei einem Unfall unterschiedlich von der eines normalen Fußgängers. So ist zu erwarten, dass sie häufiger mit dem Kopf auf die Windschutzscheibe auftreffen werden. Durch die Unterscheidung von schnellen und normalen Fußgängern können so die Schutzmittel optimal an die Flugbahn dieser Personen angepasst werden.

Durch die in den abhängigen Ansprüchen aufgeführten Maßnahmen und Weiterbildungen sind vorteilhafte Verbesserungen der im unabhängigen Patentanspruch angegebenen Vorrichtung zur Ansteuerung von Schutzmitteln für einen Fußgänger möglich.

Besonders vorteilhaft ist, dass die Vorrichtung zusätzlich ein Signal einer Kontaktsensorik bei der Ansteuerung der Schutzmittel berücksichtigt. Damit ist der Auslösezeitpunkt und auch die Unfallschwere besser bestimmbar. Auch kann mit der Kontaktsensorik die Relativgeschwindigkeit kurz vor dem Auftreffen auf das Fahrzeug besser bestimmt werden, da hier die Umfeldsensorik meist die Relativgeschwindigkeit nicht mehr bestimmen kann. Als Kontaktsensorik kommen Kraftsensoren, Lichtleiter, Beschleunigungssensoren, Piezosensoren, Kraftsensoren oder auch Kombinationen davon in Frage. Diese werden üblicherweise im Stoßfänger eingebaut. Durch den Signalverlauf in Abhängigkeit von der Zeit, aber auch Informationen über die Objektbreite und Position kann die Objektklassifizierung verbessert werden. Insbesondere können so Misusefälle besser unterdrückt werden, so dass die Vorrichtung in ihrer Funktion robuster wird.

Weiterhin ist es von Vorteil, dass die Vorrichtung die Schutzmittel in Abhängigkeit von der Energie bestimmt, mit der das Objekt, also der Fußgänger, auf das Fahrzeug aufprallt. Dabei wird eine Auslösung verhindert, wenn bei zu niedrigen Aufprallenergien die Schutzmittel möglicherweise größere Verletzungen verursachen würden als bei einem Aufprall ohne Schutzmittel. In diesem Fall wird ein Signal zur Ansteuerung der Schutzmittel unterdrückt. Dies gilt auch für zu hohe Aufprallenergien, da hier eine Fußgängerschutzaktuatorik keine Entschärfung des Unfalls mehr bringen kann.

Schließlich ist es von Vorteil, dass die Vorrichtung die Fußgänger nach deren Geschwindigkeit klassifiziert. Damit können vorteilhafterweise mit durchschnittlicher Gehgeschwindigkeit sich bewegende Fußgänger von schnellen Fußgängern wie Inline-Skatem, Läufern oder Radfahrern unterschieden werden, was zu einer optimaleren Ansteuerung von Fußgängerschutzmitteln führt.

### Zeichnung

Ein Ausführungsbeispiel der Erfindung ist in der Zeichnung dargestellt und wird in der nachfolgenden Beschreibung näher erläutert.

Es zeigen
- Figur 1: ein Blockschaltbild der erfindungsgemäßen Vorrichtung und
- Figur 2: ein Flussdiagramm

### Beschreibung

Fußgänger gehören zu den am stärksten gefährdeten Personengruppen im Straßenverkehr. Um für diese einen besseren Schutz zu erreichen laufen seit einigen Jahren Untersuchungen bei der Europäischen Union. Gleichzeitig bemühen sich auch die Automobilhersteller um dieses Thema. Dabei werden konstruktive Maßnahmen an der Fahrzeugfront favorisiert, die eine Anpassung der Geometrie oder die Wahl anderer Materialien oder das Einfügen energieabsorbierender Strukturen beinhalten.

Eine weitere Idee betrifft den Einsatz von Schutzmitteln für die Fußgänger, also den Einsatz von Aktuatoren. Diese sollen im Falle eines Fußgängerunfalls eine energieabsorbierende Wirkung entfalten. Dies kann beispielsweise geschehen durch ein Anheben der Fronthaube oder durch den Einsatz von Airbags vor der A-Säule. Zur bedarfsgerechten Aktivierung ist hierbei eine verlässliche Sensorik unverzichtbar, die den Fußgängerunfall entweder vorher oder währenddessen schnell genug erkennen kann und sicher von Nichtauslösefällen unterscheiden kann.

Erfmdungsgemäß wird nun vorgeschlagen, unter Berücksichtigung der Relativgeschwindigkeit zwischen dem Fahrzeug und dem Fußgänger, sowie der Eigengeschwindigkeit des Fahrzeugs, die Schutzmittel anzusteuern. Aus diesen beiden Parametern ist insbesondere die Eigengeschwindigkeit des Fußgängers bestimmbar und somit die Energie besser abschätzbar, mit der er auf das Fahrzeug aufprallen wird. Eine Auslösung wird unterhalb einer bestimmten Geschwindigkeit unterdrückt werden, um beispielsweise Parkrempler und Unfälle mit geringen Energieumsätzen herauszufiltern. Die Schäden sind dann meistens nicht so groß. Auf der anderen Seite wird die Auslösung oberhalb einer oberen Geschwindigkeitsschwelle ebenfalls unterdrückt, da hier die umgesetzte Energie meist so groß ist, dass auch eine zusätzliche Aktuatorik nicht zur wesentlichen Entschärfung des Unfalls für den Fußgänger führt.

Durch die Bestimmung der Eigengeschwindigkeit des Fußgängers können Fußgänger von schnellen Fußgängern, wie Fahrradfahrern und Inlineskatern, unterschieden werden. Durch deren höhere Eigengeschwindigkeit, ihren höheren Schwerpunkt und ihre geringere Reibung zum Boden ist die Flugbahn dieser Personen bei einem Unfall unterschiedlich von der eines normalen Fußgängers. Demnach ist zu erwarten, dass sie häufiger mit dem Kopf auf die Windschutzscheibe auftreten werden. Durch die Unterscheidung von schnellen und normalen Fußgängern können so die Schutzmittel optimal an die Flugbahn dieser Personen angepasst werden. Je nach Ausführung der Kontaktsensorik kann auch zwischen Inlineskatern und Fahrradfahrern unterschieden werden und die Schutzmaßnahmen können dann noch optimaler darauf angepasst werden. Für die Erkennung und Unterscheidung zwischen Inlineskatern und Fahrradfahrern eignet sich insbesondere ein Videosystem.

Das für den Fußgängerschutz einzusetzende Sensorsystem muss zum einen so gut wie möglich den Fußgänger oder allgemein das aufprallende Objekt erkennen und klassifizieren, damit die Auslöseentscheidung für die Aktuatorik angemessen getroffen werden kann.

Es sollen auslöserelevante Objekte (Menschen) von nicht auslöserelevanten Objekten (Mülltonne, Pfahl, Baum, Verkehrsschild etc.) unterschieden werden. Dies wird mit einer entsprechenden Klassifikation erreicht.

Zum anderen muss, wie oben beschrieben, die Relativgeschwindigkeit zwischen Auto und Fußgänger gemessen werden. Zur Messung der Relativgeschwindigkeit können zum Beispiel Ultraschall, Radar, Video oder Lasersysteme eingesetzt werden, die beispielsweise über Triangulation, Dopplermessungen oder Laufzeitmessungen die Position pro Zeiteinheit, also die Geschwindigkeit, bestimmen. Eine Objektklassifizierung kann mit diesem System zum Teil gut, insbesondere bei Video, und zum Teil nicht so optimal, wie bei Radar, vorgenommen werden. Um diese noch weiter zu verbessern, können Kontaktsensoren eingesetzt werden, die das auftreffende Objekt erst im Aufprall sensieren. Hierzu kommen zum Beispiel FSR-Sensoren, Lichtleitersensoren, Piezosensoren, Kraftsensoren oder auch eine Kombination davon zum Einsatz. Diese Kontaktsensorik wird üblicherweise im Stoßfänger eingebaut. Durch den Signalverlauf über die Zeit, aber auch Informationen über die Objektbreite und Position kann die Objektklassifizierung verbessert oder auch alleine durchgeführt werden.

Wenn zur Auswertung des Kontaktsensorsignals die Information über die Relativgeschwindigkeit bereits vorhanden ist, kann die Auswertung hierbei wesentlich verbessert werden, da man eine Unbekannte weniger hat. Ein schnelles Objekt wird dann anders behandelt, als ein langsames und die Misuse-Fälle werden besser unterdrückt, so dass die Vorrichtung in ihrer Funktion insbesondere robuster wird.

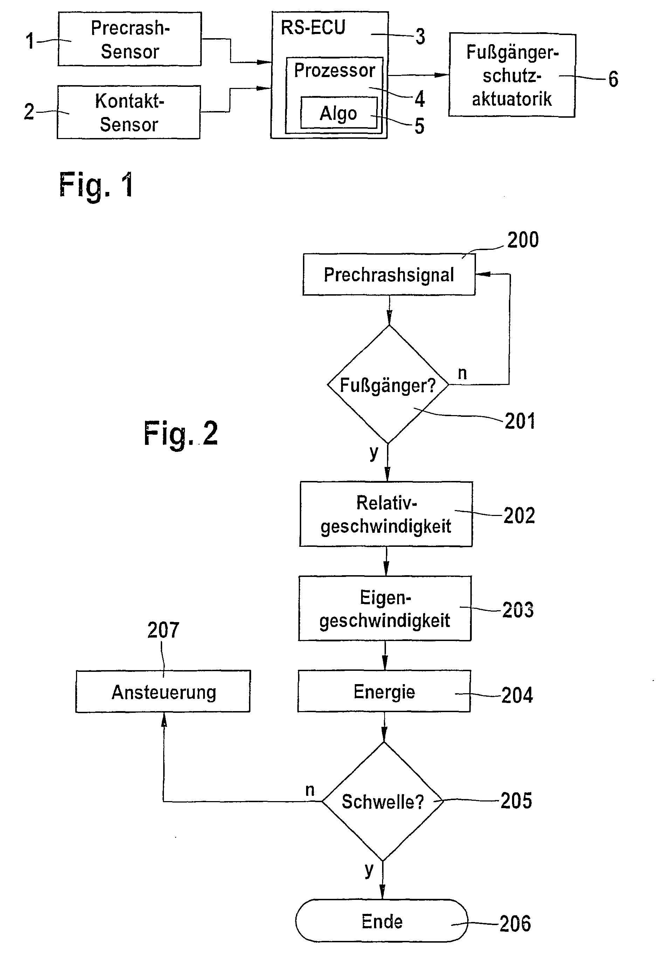

Figur 1 zeigt in einem Blockschaltbild die erfindungsgemäße Vorrichtung. Eine Precrashsensorik 1 ist an einen ersten Dateneingang eines Steuergeräts 3 zur Ansteuerung von Rückhaltemitteln 6 angeschlossen. An einen zweiten Dateneingang ist eine Kontaktsensorik 2 angeschlossen. Das Steuergerät 3 weist einen Prozessor 4 auf, auf dem ein Algorithmus 5 abläuft, um Schutzmittel für Fußgänger anzusteuern. Eine solche Fußgängerschutzaktuatorik 6 ist daher über einen Datenausgang an das Steuergerät 3 angeschlossen. Bei dem Steuergerät 3 kann es sich hier um das Steuergerät im Fahrzeug handeln, das die gesamten Rückhaltemittel, auch für die Insassen, ansteuert. Es ist jedoch möglich, dass das Steuergerät 3 lediglich zur Ansteuerung der Fußgängerschutzaktuatorik verwendet wird. Für den Fall, dass das Steuergerät 3 auch für die Schutzmittel für die Fahrzeuginsassen verwendet wird, sind hier der Einfachheit halber weitere Sensoren, die mit dem Steuergerät 3 verbunden sind bzw. die entsprechenden Rückhaltemittel, nicht dargestellt.

Das Steuergerät 3, über seinen Prozessor 4 und den Algorithmus 5, steuert in Abhängigkeit von Signalen der Precrashsensorik 1 und der Kontaktsensorik 2 die Fußgängerschutzaktuatorik 6 an. Dabei wird mit der Precrashsensorik 1 ein Fußgänger erkannt und beispielsweise seine geometrischen Abmessungen bestimmt. Weiterhin wird mit der Precrashsensorik 1 die Relativgeschwindigkeit des Fußgängers zum Fahrzeug, in dem sich die Vorrichtung befindet, bestimmt. Durch die Eigengeschwindigkeit des Fahrzeugs, die beispielsweise auf dem CAN-Bus vorhanden ist und beispielsweise mittels Raddrehzahlsensoren oder dem Tachometer bestimmt wird, kann dann die Eigengeschwindigkeit des Fußgängers bestimmt werden. Auch seine Bewegung, also seine Trajektorie im Bezug auf die Bewegung des Fahrzeugs wird bestimmt. Damit kann sehr genau ein möglicher Aufprallzeitpunkt bestimmt werden und auch eine mögliche Flugbahn des Fußgängers. Diese Daten sind sehr hilfreich, um die Fußgängerschutzaktuatorik optimal anzusteuern. Insbesondere die Relativgeschwindigkeit gibt Auskunft über die Unfallschwere. Die Kontaktsensorik 2 liefert den Zeitpunkt, zu dem es zum Aufprall gekommen ist, und gegebenenfalls den Aufprallort, die Schwere des Aufpralls (z.B. Beschleunigungssensor) und die Breite des Fußgängers, mit dem er auf das Fahrzeug aufprallt. Auch mit diesen Daten kann einerseits die Relativgeschwindigkeit beim Aufprall bestimmt werden und andererseits die Flugbahn noch genauer vorhergesagt werden. Diese Daten verknüpft dann der Prozessor 4 mittels des Algorithmus 5, um die entsprechenden Schutzmittel für den Fußgänger 6 anzusteuern.

Figur 2 erläutert an einem Flussdiagramm den Ablauf, den die erfindungsgemäße Vorrichtung durchläuft. In Verfahrensschritt 200 wird mit der Precrashsensorik 1 der Fußgänger erfasst. In Verfahrensschritt 201 wird geprüft, ob es sich tatsächlich um einen Fußgänger handelt, oder nicht. Ist dies nicht der Fall, wird zu Verfahrensschritt 200 zurückgesprungen. Ist dies aber der Fall, dann wird in Verfahrensschritt 202 die Relativgeschwindigkeit des Fußgängers zum Fahrzeug bestimmt. Auch der Vektor, also die Richtung, wird bestimmt. Mittels der Eigengeschwindigkeit des Fahrzeugs kann in Verfahrensschritt 203 die Eigengeschwindigkeit des Fußgängers bestimmt werden. Damit sind die Daten vorhanden, um in Verfahrensschritt 204 die Energie zu bestimmen, mit der es zum Aufprall kommen wird. In Verfahrensschritt 205 wird geprüft, ob diese Energie unterhalb einer vorgegebenen Schwelle oder oberhalb einer weiteren Schwelle ist. Ist das der Fall, dann wird in Verfahrensschritt 206 das Verfahren beendet, da bei einer sehr niedrigen Aufprallenergie der Einsatz von Schutzmitteln nicht notwendig ist und bei sehr hohen Aufprallenergien der Einsatz von Schutzmitteln vermutlich auch keine Linderung des Aufpralls mehr ergibt. Liegt jedoch die Aufprallenergie innerhalb des Bandes, das durch die beiden Schwellwerte bestimmt wird, dann wird in Verfahrensschritt 207 eine Ansteuerung der entsprechenden Schutzmittel für die Fußgänger vorgenommen.

## Patentansprüche

1. Vorrichtung zur Ansteuerung von Schutzmitteln (6) für einen Fußgänger, wobei die Vorrichtung eine Umfeldsensorik (1) zur Bestimmung einer Relativgeschwindigkeit zwischen einem Fahrzeug, in dem sich die Vorrichtung befindet, und einem Fußgänger aufweist, wobei die Vorrichtung derart konfiguriert ist, dass die Vorrichtung die Schutzmittel (6) in Abhängigkeit von der Relativgeschwindigkeit und einer Eigengeschwindigkeit des Fahrzeugs ansteuert, **dadurch gekennzeichnet, dass** die Vorrichtung in Abhängigkeit von einem ersten Signal der Umfeldsensorik eine Flugbahn des Fußgängers bestimmt und anhand der Relativgeschwindigkeit eine Aufprallenergie schätzt und die Schutzmittel (6) in Abhängigkeit von der Aufprallenergie ansteuert, wobei die Ansteuerung unterdrückt wird, wenn die Aufprallenergie zu hoch oder zu niedrig ist.

2. Vorrichtung nach Anspruch 1, **dadurch gekennzeichnet, dass** die Vorrichtung in Abhängigkeit von dem ersten Signal eine Flugbahn des Fußgängers bestimmt und in Abhängigkeit von der Flugbahn die Schutzmittel (6) ansteuert.

3. Vorrichtung nach Anspruch 1 oder 2, **dadurch gekennzeichnet, dass** die Vorrichtung zusätzlich mit einer Kontaktsensorik (2) verbunden ist und in Abhängigkeit von einem zweiten Signal der Kontaktsensorik (2) die Schutzmittel (6) ansteuert.

4. Vorrichtung nach Anspruch 1, **dadurch gekennzeichnet, dass** die Vorrichtung den Fußgänger anhand seiner Geschwindigkeit klassifiziert.

## Claims

1. Device for actuating a pedestrian protection means (6), wherein the device has a surroundings sensor system (1) for determining a relative velocity between a vehicle in which the device is located and a pedestrian, wherein the device is configured in such a way that the device actuates the protection means (6) as a function of the relative velocity and the vehicle's own velocity, **characterized in that** the device determines a trajectory of the pedestrian as a function of a first signal of the surroundings sensor system and estimates impact energy on the basis of the relative velocity and actuates the protection means (6) as a function of the impact energy, wherein the actuation is suppressed if the impact energy is too high or too low.

2. Device according to Claim 1, **characterized in that** the device determines a trajectory of the pedestrian as a function of the first signal and actuates the protection means (6) as a function of the trajectory.

3. Device according to Claim 1 or 2, **characterized in that** the device is additionally connected to a contact sensor system (2) and actuates the protection means (6) as a function of a second signal of the contact sensor system (2).

4. Device according to Claim 1, **characterized in that** the device classifies the pedestrian on the basis of his velocity.

## Revendications

1. Dispositif de commande des moyens de protection (6) de piétons, selon lequel:
le dispositif comporte des capteurs de champ environnant (1) pour déterminer la vitesse relative entre un véhicule équipé du dispositif et un piéton,
le dispositif étant configuré pour commander les moyens de protection (6) en fonction de la vitesse relative et de la vitesse propre du véhicule,
**caractérisé en ce que**
le dispositif détermine une trajectoire du piéton en fonction d'un premier signal fourni par les capteurs de champ environnant et, à l'aide de la vitesse relative, il évalue une énergie de collision et commande les moyens de protection (6) en fonction de celle-ci, et
la commande est neutralisée si l'énergie de collision est trop faible ou trop élevée.

2. Dispositif selon la revendication 1,
**caractérisé en ce que**
le dispositif détermine une trajectoire du piéton en fonction du premier signal et il commande les moyens de protection (6) en fonction de la trajectoire.

3. Dispositif selon la revendication 1 ou 2,
**caractérisé en ce qu'**
en outre, le dispositif est relié à des capteurs de contact (2) et il commande les moyens de protection (6) en fonction d'un second signal fourni par les capteurs de contact (2).

4. Dispositif selon la revendication 1,
**caractérisé en ce qu'**
il classe les piétons en fonction de sa vitesse.
